# EUROPEAN PATENT SPECIFICATION

(11) **EP 0 533 270 B1**
(45) Date of publication and mention of the grant of the patent: **24.04.1996**
(21) Application number: 92202816.2
(22) Date of filing: 15.09.1992
(51) Int. Cl.: B60D 1/52

(54) **Towing-hook device with detachable ball rod**
Anhängerkupplungsvorrichtung mit abnehmbarer Kugelkopfstange
Dispositif d'attelage avec rotule détachable

(30) Priority: 19.09.1991 NL 9101578
(43) Date of publication of application: 24.03.1993
(73) Proprietor: Bolland, Jan, NL-7313 AV Apeldoorn (NL)
(72) Inventor: Bolland, Jan, NL-7313 AV Apeldoorn (NL)
(74) Representative: Morel, Christiaan F., Ir.Dr.

(56) References cited:
- EP-A- 0 455 251
- DE-A- 3 317 453
- DE-U- 8 703 875
- DE-U- 8 714 966

## Description

The invention relates to a towing-hook device for vehicles, especially for motor vehicles, which device consists of two parts, which can be detachably connected to each other, in which one of the two parts is fastened to the vehicle and the other part comprises a ball rod with on one extremity a ball, while one of the parts comprises a housing or holder, wherein the device comprises means which can lock the ball rod part detachably to the other part and wherein the ball rod part comprises an opening in which a locking element can be slid in and out by means of displacement means in a direction more or less perpendicular to the longitudinal axis of the ball rod, while the part which is connected to the vehicle comprises a locking opening in which the locking element is located in the locking position.

Such a device is known from the German Gebrauchsmuster DE-U-87.03.875. The housing as well as the displacement means of the device according to DE-U-87.03.875 are connected to the ball rod, while the locking opening in which the locking element, consisting of a bolt or pin, is located in the locking position, is formed by a nut in the part, which is fastened to the vehicle and which shows a cylindrical shape. The displacement means can be immobilised by means of a security pin. A drawback of the device according to DE-U-87.03.875, is that the relatively small fastened, cylindrical part is considerably weakened by the nut, and will not be able to resist the high forces and the bending and torsional moments, which are applied in practice to the towing hook. If for example torsional moments are applied to the towing hook, extremely high pressures will occur near the ends of the nut, and the fastened part will be deformed and become even weaker. The construction of this towing hook device therefor is weak and unsafe. Furthermore, because the security pin has to be removed before the towing hook device can be unlocked, it is not possible to remove the device in a quick and easy way.

The object of the invention is a towing hook device with a strong structure which meets all safety requirements in the various European countries. Another object of the invention is a towing hook device that can easily and quickly be fitted or removed.

The object is achieved with a towing hook device according to the invention, wherein the part with the housing is fixed to the vehicle, which housing comprises the locking opening and wherein at the other extremity than the extremity to which the ball is fixed, the ball rod is provided with metal block parts of which the opposing head faces are parallel and which metal block parts are fastened, for example welded, to the ball rod in such a manner that the opening of the ball rod part is a cavity, which is limited at two sides by the two parallel opposing head faces of the two metal block parts and that the locking element consists of a metal plate or block with two parallel opposing faces, the distance between the head faces of the metal block parts being the same as the distance between the parallel opposing faces of the metal block wherein the metal block can slide to and fro between the two metal block parts. This has the advantage that neither the ball rod nor the fastened part is weakened by a nut or recess. The towing hook device according to the invention is considerably stronger than the known devices according to the prior art and is able to meet the safety requirements to be complied with.

In a preferred embodiment of the device according to the invention, the cross-section of the inner cavity enclosed by the housing is approximately rectangular and the bottom of the housing tapers conically rearwards in relation to the top of the housing, and the top face and the bottom face of the metal block parts are placed at an angle such that they complement the dimensions of the cavity formed by the housing. Such a construction has the advantage that it shows no rotational symmetry, so that it can resist torsional moments in a much better way. Also bending moments can be resisted in a better way. Furthermore because of the conical shape, this embodiment is easy to fix and to remove.

In a further preferred embodiment the device comprises immobilising means which can immobilise the metal block in the locking position, the displacement means comprising means for removing the immobilising means from the immobilising position. This has the advantage that the metal block is secured in its locking position, while it is still possible to remove by means of the displacement means in one movement the metal block with the immobilising means from the locking position.

With such an embodiment of the towing-hook according to the invention, the towing-hook/ball part or the ball rod is easy to remove from the car whilst, if this towing-hook/ball part is fastened to the housing or holder, the locking is such that it has been experimentally established that the connection between the frame part and the towing-hook/ball part cannot then be unlocked by the human hand.

The invention is further explained with reference to the drawing. In the drawing:
- Fig. 1: shows the rear of a car provided with a towing-hook according to the invention;
- Fig. 2: shows a frame part of a towing-hook according to the invention;
- Fig. 3: shows a view of a portion of the towing-hook/ball part according to the invention;
- Fig. 4: shows a cross-section through the housing of the frame part together with the towing-hook/ball part according to the invention;
- Fig. 5: shows the same cross-section as in Fig. 4, the towing-hook/ball part being shown in the immobilised position in the housing;
- Fig. 6: shows a cross-section according to the line VI-VI in Fig. 5;
- Fig. 7: shows a cross-section according to the line VII-VII in Fig. 5;
- Fig. 8: shows, in longitudinal section, another possible embodiment of a towing-hook according to the invention;
- Fig. 9: shows, in cross-section according to the line IX-IX, the towing-hook according to the invention in Fig. 8;
- Fig. 10: shows, in another longitudinal section according to the line X-X, the same towing-hook according to the invention as shown in Fig. 8;
- Fig. 11: shows a view of the towing-hook/ball part of the towing-hook according to Fig. 8.

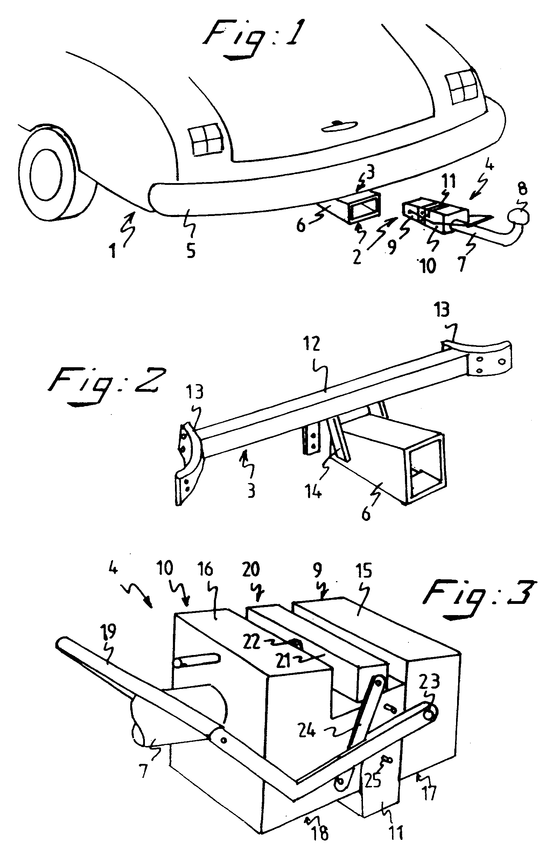

Figure 1 shows the rear of a car 1 underneath which a towing-hook 2 according to the invention is fastened. According to the invention, the towing-hook consists of a frame part 3 and a towing-hook/ball part 4. The housing 6 can be seen on the frame part under the bumper 5 of the car. The towing-hook/ball part 4 consists of a L-shaped rod 7 with a ball 8 at one of the ends, as generally known and applied in a towing-hook. Two metal blocks 9, 10 are fastened to the other end of the L-shaped rod 7, in this case welded, between which a metal plate 11 can slide to and fro.

Figure 2 shows a possible embodiment of a frame part 3 according to the invention. The frame part consists of a metal girder 12 which is provided on either side with fastening means 13 to make it possible to fasten the metal girder to the chassis of the car. Under the chassis girder, the housing 6 is welded to the metal girder 12 with the aid of two strips 14.

Figure 3 shows the towing-hook/ball part 4 according to the invention in greater detail. The two metal blocks 9 and 10 are fastened to the L-shaped rod 7 with the ball 8 (not shown here). In this embodiment, the top faces 15, 16 of the metal parts 9 and 10 lie in the extension of each other, whilst the bottom faces 17 and 18 are placed at a slight angle, in this case 10 degrees, relative to the top face, as a result of which the top faces taper conically rearwards with respect to the bottom faces. A metal plate 11, which, with the aid of a handle 19 can be displaced in a vertical direction from a first limit position to a second limit position, is located between the metal blocks 9 and 10. With the aid of immobilising means 20, the metal plate 11 can be immobilised in the bottom position. The immobilising means 20 consist of a wedge-shaped small metal block 21 whose top and bottom taper conically rearwards. This small block can, with the aid of a spring 22, be pressed and held in the limit position whilst, with the aid of the handle 19, which is fastened rotatably around the point 23 on the block 9, the small metal block 21 can be returned to the position in which the metal plate 11 can be moved freely up and down. For this purpose, two metal strips 24 are fitted to either side, one end of each strip 24 being rotatably fastened to the small metal block 21 and the other end being rotatably fastened to the block 10. With the aid of a ridge on the inside of the handle 19, the small metal block 21 can be placed, with the aid of the strips 24, in the start position in which the metal plate 11 is mobilised. The metal plate 11 can now, with the aid of the same handle 19, be moved upward in a vertical direction. In order that the metal plate 11 can be moved up and down in a vertical direction with the aid of the handle 19, four ridges 25 are fitted on either side on the metal plate 11.

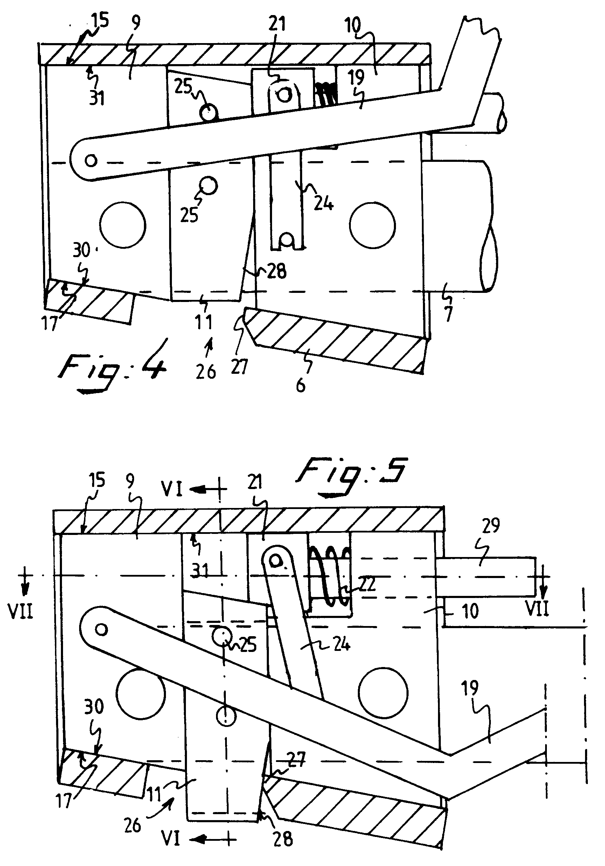

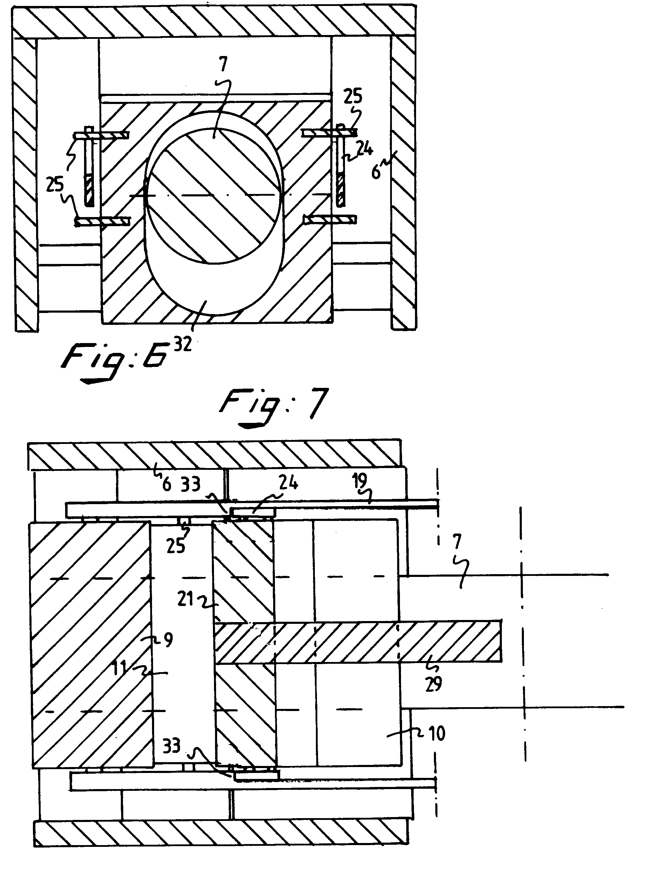

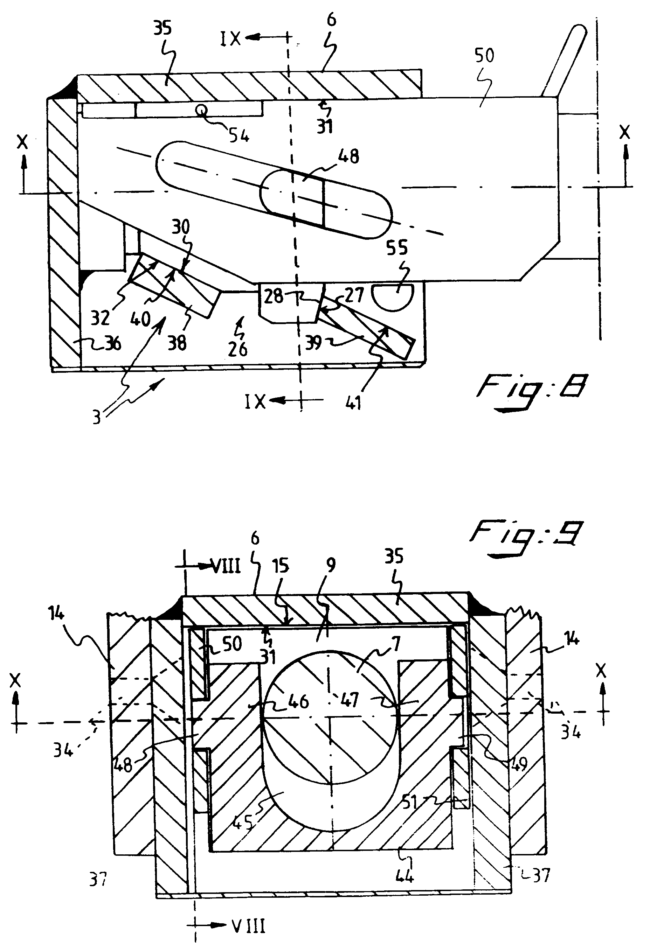

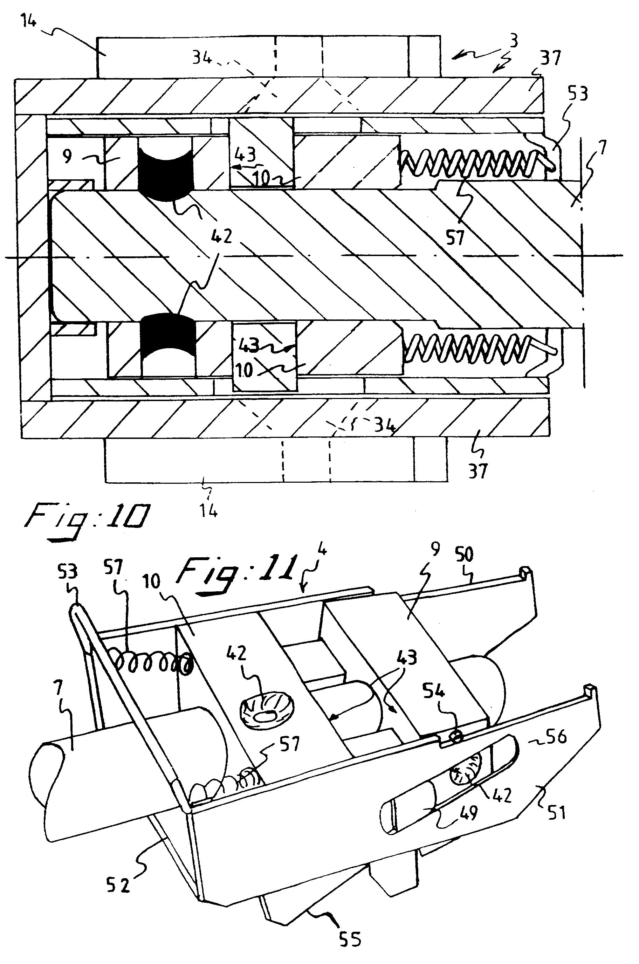

Figures 4 and 5 show a cross-section of the housing of the frame part, together with one end of the towing-hook/ball part which is placed in the housing. Figure 4 illustrates the position of the handle 19 and the metal plate 11 whereby the towing-hook/ball part can be removed from the housing, whilst Figure 5 illustrates the position of the handle 19 and the metal plate 11 whereby the towing-hook/ball part is clamped in the housing 6 of the frame part. An elongate groove 26, provided with a stop 27, is fitted in the housing 6, on the bottom. The metal plate 11 is provided with a slanting side 28 which is placed at the same angle and can interact with the stop 27. When the metal plate 11 is pressed in the bottom position with the aid of the handle, as illustrated in Figure 5, it can be pressed in a clamping manner into the elongate groove 26 with the aid of the stop 27 and stop face 28 placed at an angle. Next, with the aid of the small metal block 21, the metal plate 11 can be firmly held in the clamped bottom position. For this purpose, a metal bar 29, which serves as a guide and around which a spring 22 is also placed, the spring pressing the small metal block 21 forwards, is fastened to the small metal block 21. The bottom 30 of the housing 6 tapers rearwards at a slight angle with respect to the top side 31 of the inner side of the housing 6. The top face 15 and the bottom face 17 of the block 9 also taper at a slight angle towards each other, this angle being the same as the angle at which the bottom 30 and the top side 31 of the enclosed cavity of the housing 6 taper.

Figures 6 and 7 show cross-sections through the device, as illustrated in Figure 5, according to the lines VI-VI and VII-VII, respectively. The metal plate 11 is illustrated in Figure 6, an elongate hole 32 being provided therein through which the rod 7 of the towing-hook projects. The metal plate 11 can therefore be moved to and fro over a desired distance. Figure 7 illustrates the handle 19 which is provided with a stop 33 with which the metal strips 24 can be pressed in forwards against the spring tension so that, when the lever or grip 19 is rotated upwards, the immobilising means are displaced, as a result of which the metal plate 11 is released in order then to be displaced vertically upwards with the same handle 19, because the arms of the handle 19 press against the ridges 25.

Figures 8, 9 and 10 show cross-sections of another possible embodiment of the device of which a view is illustrated in Figure 11. This embodiment of the towing-hook also consists of a frame part 3 and a towing-hook/ball part 4. As illustrated in Figures 1 and 2, the frame part consists of a frame part 3 to be fastened under the bumper 5 of the car, the frame part being constructed from a housing 6 which, with the aid of two screws 34 whose heads are countersunk in the side wall of the housing 6, is firmly connected to the strip parts 14 of the frame part 3. In this case, the housing 6 consists of a strong four-sided metal box constructed from a top wall 35, a rear wall 36 and two side walls 37. Two metal plates 38 and 39 are welded between the two side walls 37, the top face 40 of the metal plate 38 and the top face 41 being at a slight angle, which in this case is approximately 28°, relative to the top side of the inner face 31 of the housing 6. The elongate groove 26 with the stop 27 is located between the plates 38 and 39.

When the towing-hook/ball part 4 is placed in the housing 6, the faces 40, 41 and 31 form the boundaries against which the metal parts of the towing-hook/ball part 4 rest when the latter is located in the locked position in the housing 6.

The towing-hook/ball part 4 consists of two metal parts 9, 10 which are welded near the end of the L-shaped ball rod 7 as illustrated, inter alia, at the points marked with the reference number 42. A metal block 44, in which a U-shaped hollow 45 is provided so that said metal block 44 can be displaced up and down between the metal parts 9 and 10 and around the L-shaped ball rod 7, is placed between the parallel faces 43, which face towards each other, of the metal parts 9, 10. The metal block 44 thus has a U-shape with two legs 46 and 47. Cylindrical heads 48, 49, facing outwards, are fitted on the side walls so that it is possible to move the metal part 44 up and down. Two plates 50, 51 are fitted on either side of the towing-hook/ball part 4, said plates being placed parallel to each other and mutually fastened to each other with the aid of rods 52, 53. The plates 50, 51 which are placed parallel to each other can be displaced in the longitudinal direction by pulling on the lever 53, the metal blocks 9 and 10 each being provided with guide studs 54, 55. An elongate hole or channel hole 56 is left open in both plates 50, 51, which hole is at an angle relative to the longitudinal direction in which the plates 50, 51 of the slides can be displaced. The slides 50, 51 are brought into the preferred position with the aid of two springs 57, the metal plate 44 being located in the bottom position, said position being that in which the metal plate engages behind the metal plate 39 of the housing 6 and thus holds the towing-hook/ball part 4 in the locked position.

Further arrangements, which are not shown here, may be provided, in which, for example, a pin is placed through the ball rod 7, as a result of which the slides 50, 51 cannot be displaced in the longitudinal direction if they are located in the locked position.

## Claims

1. Towing-hook device (2) for vehicles, especially for motor vehicles, which device consists of two parts (3, 4) which can be detachably connected to each other and in which one of the two parts (3) is fastened to the vehicle and the other part (4) comprises a ball rod (7) with on one extremity a ball (8), while one of the parts (3) comprises a housing or holder (6), wherein the device (2) comprises means which can lock the ball rod part (4) detachably to the other part (3), wherein the ball rod part (4) comprises an opening in which a locking element can be slid in and out by means of displacement means in a direction more or less perpendicular to the longitudinal axis of the ball rod, while the part which is connected to the vehicle comprises a locking opening in which the locking element is located in the locking position **characterised** in that the part with the housing (6) is fixed to the vehicle, which housing (6) comprises the locking opening (26), and in that at the other extremity than the extremity to which the ball is fixed, the ball rod (7) is provided with metal block parts (9, 10) of which the opposing head faces (43) are parallel and which metal block parts (9, 10) are fastened, for example welded, to the ball rod (7) in such a manner that the opening of the ball rod part is a cavity, which is limited at two sides by the two parallel opposing head faces of the two metal block parts (9, 10), and in that the locking element consists of a metal plate or block (11, 44) with two parallel opposing faces, the distance between the head faces of the metal block parts (9, 10) being the same as the distance between the parallel opposing faces of the metal block (11, 44), wherein the metal block (11, 44) can slide to and fro between the two metal block parts (9, 10).

2. Device according to Claim 1, **characterised** in that the cross-section of the inner cavity enclosed by the housing (6) is approximately rectangular and the bottom (30) of the housing (6) tapers conically rearwards in relation to the top (31) of the housing (6), and in that the top face and the bottom face of the metal block parts (9, 10) are placed at an angle such that they complement the dimensions of the cavity formed by the housing (6).

3. Device according to Claim 2, **characterised** in that the metal plate or block (11, 44) is provided with an elongate hole or aperture (34, 45), through which the ball rod (7) projects, and in that the housing (6) is provided with an elongate groove (26) through which the metal block (11, 44) can project downwards, and in that the metal block (11, 44) is provided with a slanting surface (28) which is placed at a slight angle with respect to the direction of displacement of the metal block (11) and which can interact with a stop (27) which forms the edge of the elongate groove (26) in the housing (6).

4. Device according to one of the preceding claims, **characterised** in that the device comprises immobilising means which can immobilise the metal block (11) in a specific desired position and in that the displacement means comprise means for removing the immobilising means from the immobilising position.

5. Device according to claim 4, **characterised** in that the immobilising means comprise springs (57) which pull the slides (50, 51) towards the rear preferred position.

6. Device according to one of the claims 4 or 5, **characterised** in that the immobilising means consist of a wedge-shaped small metal block (21) which can interact with the top face of the metal block (11), which faces are both placed at the same angle relative to the horizontal.

7. Device according to one of the claims 4, 5 or 6, **characterised** in that, with the aid of a lever (19), firstly the immobilising means can be placed in a position, it being possible then for the metal block (11) to be displaced in a vertical direction with the same lever (19) until the metal block (11) falls totally inside the boundary of the inner walls of the housing (6).

## Patentansprüche

1. Anhängerkupplung (2) für Fahrzeuge, insbesondere für Kraftfahrzeuge, die aus zwei Teilen (3, 4) besteht, die miteinander in lösbarer Weise verbunden werden können, und bei der der eine (3) der beiden Teile am Fahrzeug befestigt ist, und von denen der andere Teil (4) eine Kugelstange (7) umfaßt, die an ihrem einen Ende eine Kugel (8) aufweist, während der andere der Teile (3) ein Gehäuse bzw. einen Halter (6) umfaßt, wobei weiterhin die Vorrichtung (2) Mittel umfaßt, mit deren Hilfe der Kugelstangenteil (4) in lösbarer Weise am anderen Teil (3) verriegelbar ist, und wobei der Kugelstangenteil (4) eine Öffnung aufweist, in die ein Verriegelungselement mit Hilfe einer Verschiebeeinrichtung in einer Richtung eingeschoben bzw. herausgezogen werden kann, die mehr oder weniger senkrecht zur Längsrichtung der Kugelstange verläuft, während der Teil, der mit dem Fahrzeug verbunden ist, eine Verriegelungsöffnung aufweist, in der sich das Verriegelungselement in der Verriegelungsstellung befindet, dadurch **gekennzeichnet,** daß der Teil mit dem Gehäuse (6) am Fahrzeug befestigt ist, wobei das Gehäuse (6) die Verriegelungsöffnung (26) umfaßt, daß an dem Ende, das dem Ende gegenüberliegt, an dem die Kugel befestigt ist, die Kugelstange (7) Metallblockteile (9, 10) umfaßt, deren einander gegenüberliegende Stirnflächen (43) parallel sind, wobei diese Metallblockteile (9, 10) an der Kugelstange (7) beispielsweise durch Schweißen derart befestigt sind, daß die Öffnung des Kugelstangenteils ein Hohlraum ist, der an zwei Seiten durch zwei parallele, einander gegenüberliegende Stirnflächen der beiden Metallblockteile (9, 10) begrenzt wird, und daß das Verriegelungselement aus einer Metallplatte oder einem Block (11, 44) mit zwei parallelen gegenüberliegenden Flächen besteht, wobei der Abstand zwischen den Stirnflächen der Metallblockteile (9, 10) der gleiche ist, wie der Abstand zwischen den parallelen gegenüberliegenden Flächen des Metallblocks (11, 44), so daß der Metallblock (11, 44) zwischen die beiden Metallblockteile (9, 10) eingeschoben bzw. zwischen ihnen herausgezogen werden kann.

2. Vorrichtung nach Anspruch 1, dadurch **gekennzeichnet,** daß der Querschnitt des inneren Hohlraums, der vom Gehäuse (6) eingeschlossen wird, ungefähr rechtwinklig ist und daß der Boden (30) des Gehäuses (6) mit einer konischen Verjüngung nach hinten zur Oberseite (31) des Gehäuses (6) hin verläuft, und daß die obere Fläche und die Bodenfläche der Metallblockteile (9, 10) unter einem Winkel angeordnet sind, so daß sie den Abmessungen des durch das Gehäuse (6) geformten Hohlraumes komplementär entsprechen.

3. Vorrichtung nach Anspruch 2, dadurch **gekennzeichnet,** daß die Metallplatte oder der Block (11, 44) mit einem Langloch oder einer langgestreckten Öffnung (34, 45) versehen ist, durch die die Kugelstange (7) vorsteht, daß das Gehäuse (6) mit einer langgestreckten Vertiefung (26) versehen ist, durch die der Metallblock (11, 44) nach unten vorstehen kann, und daß der Metallblock (11, 44) mit einer geneigten Oberfläche (28) versehen ist, die unter einem kleinen Winkel bezüglich der Verschieberichtung des Metallblocks (11) angeordnet ist und die mit einem Anschlag (27) zusammenwirken kann, der den Rand der langgestreckten Vertiefung (26) im Gehäuse (6) bildet.

4. Vorrichtung nach einem der vorhergehenden Ansprüche, dadurch **gekennzeichnet,** daß sie Festlegemittel umfaßt, die den Metallblock (11) in einer festgelegten, gewünschten Stellung festlegen können, und daß die Verschiebeeinrichtung Mittel umfaßt, die dazu dienen, die Festlegemittel aus der Festlegestellung herauszubewegen.

5. Vorrichtung nach Anspruch 4, dadurch **gekennzeichnet,** daß die Festlegeeinrichtung Federn (57) umfaßt, die die Schlitten (50, 51) zu der hinteren bevorzugten Stellung ziehen.

6. Vorrichtung nach einem der Ansprüche 4 oder 5, dadurch **gekennzeichnet,** daß die Festlegemittel aus einem keilförmigen kleinen Metallblock (21) bestehen, der mit der oberen Fläche des Metallblocks (11) zusammenwirken kann, wobei die Flächen beide unter dem gleichen Winkel bezüglich der Horizontalen angeordnet sind.

7. Vorrichtung nach einem der Ansprüche 4, 5 oder 6, dadurch **gekennzeichnet,** daß mit Hilfe eines Hebels (19) zunächst die Festlegeeinrichtung in eine Lage gebracht werden kann und daß dann der Metallblock (11) mit Hilfe desselben Hebels (19) in einer vertikalen Richtung verschoben werden kann, bis der Metallblock (11) vollständig in die Begrenzung der Innenwände des Gehäuses (6) fällt.

## Revendications

1. Dispositif de crochet de remorquage (2) pour véhicules, en particulier pour des véhicules à moteur, ce dispositif étant constitué de deux parties (3,4) qui peuvent être accouplées l'une a l'autre de façon séparable et une des deux parties (3) est fixée au véhicule et l'autre partie (4) comprend une tige de rotule (7) qui porte une boule (8) à une extrémité, tandis qu'une des parties (3) comprend un boîtier ou un emboîtement (6), dans lequel le dispositif (2) comprend des moyens qui peuvent verrouiller la tige de rotule (4) de façon libérable à l'autre partie (3), la tige de rotule (4) comporte un logement dans lequel un élément de verrouillage peut entrer et sortir de façon coulissante sous l'action de moyens de déplacement, dans une direction sensiblement perpendiculaire à l'axe longitudinal de la tige de rotule, tandis que la partie qui est reliée au véhicule comporte un logement de verrouillage dans lequel l'élément de verrouillage est situé dans la position de verrouillage, caractérisé en ce que la partie comportant le boîtier (6) est fixée au véhicule, ledit boîtier (6) comportant l'ouverture de verrouillage (26); en ce que, à l'autre extrémité que l'extrémité à laquelle est fixée la boule, la tige de rotule (7) porte des blocs métalliques (9, 10) dont les faces de tête mutuellement en regard (43) sont parallèles, ces blocs métalliques (9,10) étant fixés, par exemple soudés, à la tige de rotule (7) d'une manière telle que le logement de la tige de rotule est une cavité qui est limitée sur deux côtés par les deux faces de tête parallèles opposées des deux blocs métalliques (9,10); et en ce que l'élément de verrouillage est un bloc ou une plaque métallique (11,44) présentant deux faces parallèles opposées, la distance entre les faces de tête des blocs de la tige (9,10) étant la même que la distance entre les faces parallèles opposées du bloc métallique (11,44), de sorte que le bloc métallique (11,44) peut coulisser en va-et-vient entre les deux parties de bloc métallique (9,10) de la tige.

2. Dispositif suivant la revendication 1, caractérisé en ce que la section transversale de la cavité intérieure entourée par le boîtier (6) est sensiblement rectangulaire et la paroi inférieure (30) du boîtier (6) s'incline progressivement vers l'arrière par rapport à la paroi supérieure (31) du boîtier (6), et en ce que la face supérieure et la face inférieure des parties de bloc métallique (9,10) sont inclinées de façon complémentaire aux dimensions de la cavité définie par le boîtier (6).

3. Dispositif suivant la revendication 2, caractérisé en ce que la plaque ou le bloc métallique (11,44) comporte un trou allongé ou une ouverture (34,45) à travers laquelle passe la tige de rotule (7), en ce que le boîtier (6) comporte une rainure allongée (26) à travers laquelle le bloc métallique (11,44) peut faire saillie vers le bas, et en ce que le bloc métallique (11,44) présente une surface biseautée (28) qui est légèrement inclinée par rapport à la direction de déplacement du bloc métallique (11) et qui peut coopérer avec une butée (27) formant le bord de la rainure allongée (26) du boîtier (6).

4. Dispositif suivant une quelconque des revendications précédentes, caractérisé en ce que le dispositif comprend des moyens d'immobilisation qui peuvent immobiliser le bloc métallique (11) dans une position spécifique désirée, et en ce que les moyens de déplacement comprennent des moyens pour retirer les moyens d'immobilisation de la position d'immobilisation.

5. Dispositif suivant la revendication 4, caractérisé en ce que les moyens d'immobilisation comprennent des ressorts (57) qui tirent des plaques coulissantes (50,51) vers la position rétractée de blocage préférée.

6. Dispositif suivant une des revendications 4 ou 5, caractérisé en ce que les moyens d'immobilisation consistent en un petit bloc métallique en forme de coin (21) qui peut coopérer avec la face supérieure du bloc métallique (11), les faces du petit bloc (21) et du bloc métallique (11) étant toutes deux inclinées suivant le même angle par rapport à l'horizontale.

7. Dispostif suivant une des revendications 4,5 ou 6, caractérisé en ce que, à l'aide d'un levier (19), on peut d'abord placer les moyens d'immobilisation à une position permettant ensuite de déplacer le bloc métallique (11) dans une position verticale au moyen du même levier (19) jusqu'à ce que le bloc métallique (11) s'inscrive entièrement à l'intérieur des limites des parois intérieures du boîtier (6).
